Europäisches Patentamt

European Patent Office

Office européen des brevets

(11) Numéro de publication: **0 385 900**

**A1**

# (12) DEMANDE DE BREVET EUROPEEN

(21) Numéro de dépôt: **90450005.5**

(22) Date de dépôt: **23.02.90**

(51) Int. Cl.⁵: **A01B 13/08**

(30) Priorité: **27.02.89 FR 8902933**

(43) Date de publication de la demande:
**05.09.90 Bulletin 90/36**

(84) Etats contractants désignés:
**AT BE CH DE ES FR GB GR IT LI LU NL SE**

(71) Demandeur: **SOCIETE TRASOL S.A.R.L.**
**R.N. 666**
**F-47260 Granges sur Lot(FR)**

(72) Inventeur: **Barre, André**
**RN 666**
**F-47260 Granges Sur Lot(FR)**
Inventeur: **Michel, Marcel**
**Lafontenelle, Montpezat d'Agenais**
**F-47360 Prayssas(FR)**

(74) Mandataire: **Ravina, Bernard**
**Cabinet Bernard RAVINA 24, boulevard**
**Riquet**
**F-31000 Toulouse(FR)**

(54) **Dent perfectionnée pour le travail de la terre.**

(57) La dite dent comporte un soc (1) monté en extrémité inférieure d'une âme allongée (2) élastique, courbée latéralement par rapport à sa direction d'avancement dans le sol, et présente un bord avant (3) et un bord arrière (4) délimitant tous deux une face concave (5) disposée obliquement par rapport à la direction d'avancement et tournée vers l'avant.

Le soc (1) est constitué par un élément longiligne (6), doté en avant d'une forme en pointe (7), monté avec possibilité de déplacement axial et blocage en translation dans un fourreau (8) disposé sous l'extrémité inférieure de l'âme (2) auquel est fixée latéralement à l'âme, une plaque d'usure (9) qui épouse sensiblement la forme de la face concave de l'âme (2) et vient recouvrir cette dernière.

Fig 1

EP 0 385 900 A1

La présente invention a pour objet des perfectionnements aux dents de travail de la terre du type de celles comportant un soc porté en extrémité inférieure d'une âme élastique courbée latéralement par rapport à la direction d'avancement dans le sol.

De telles dents présentent de plus un bord d'attaque constitué par le bord longitudinal avant de l'âme, en considérant le sens d'avancement, et un bord de fuite constitué par le bord arrière de l'âme, le bord avant et le bord arrière délimitant une face d'attaque constitué par la face concave de l'âme, cette face d'attaque qui se développe au-dessus du soc se développant de manière oblique par rapport à la direction d'avancement et étant tournée vers l'avant.

Ces dents qui sont destinées à travailler la terre suivant une profondeur de quelques dizaines de centimètres sont animées au cours de leur mouvement d'avance dans le sol d'un mouvement de flexion par diminution et accentuation de la courbure de l'âme.

Grâce à ce mouvement de flexion, il se produit un ébranlement du sol conduisant à la formation de fissure et à l'ameublissement du terrain.

Ce type de dent est particulièrement intéressant puisqu'il ameubli la terre sans la retourner et donc sans enfouir l'humus qui doit rester en surface ou proche de la surface.

D'autres dents du même genre possèdent de plus une latitude de pivotement limité autour du bord arrière de l'âme, pivotement opéré par torsion de l'âme au cours du mouvement d'avancement.

Une telle disposition améliore grandement la qualité du travail de la terre puisque conduisant essentiellement à un meilleur ameublissement.

Cependant, l'usure pour de telles dents peut modifier leurs propriétés.

Afin de prolonger leur durée de vie, il est apparu souhaitable d'adjoindre à ce type de dent des moyens pour s'opposer ou compenser l'usure de ces dents.

Cependant, l'adjonction de tels moyens peut avoir pour corrolaire une modification profonde des propriétés de la dent (torsion et/ou flexion) conduisant à un travail du sol de bien moindre qualité.

La présente invention a pour but d'apporter une solution au problème sus-évoqué en mettant en oeuvre une dent du travail de la terre du type précité pourvue de moyens pour s'opposer à l'usure et compenser cette dernière sans que ses propriétés en soient profondément altérées.

A cet effet, la dent perfectionnée conformément à l'invention pour le travail de la terre du type de celles comportant un soc monté en extrémité inférieure d'une âme allongée, élastique, courbée latéralement par rapport à la direction d'avancement dans le sol et présentant un bord avant et un bord arrière délimitant tous deux une face concave disposée obliquement par rapport à la direction d'avancement et tournée vers l'avant se caractérise essentiellement en ce que le soc est constitué par un élément longiligne terminé en partie avant par une pointe montée avec possibilité de déplacement axial et de blocage en position dans un fourreau fixé sous l'extrémité inférieure de l'âme auquel est fixé, latéralement à l'âme, une plaque d'usure qui épouse sensiblement la forme de la face concave de l'âme et vient recouvrir cette dernière.

Selon une autre caractéristique la plaque d'usure est prolongée en avant de l'âme de façon à former un coutre avant, lequel vient masquer le bord avant de l'âme, la dite plaque d'usure étant fixée à la partie inférieure de l'âme.

On comprend que grâce à ces caractéristiques, l'usure de la dent ne touchera plus l'âme de cette dernière si bien que ses propriétés mécaniques seront conservées.

De plus, comme la plaque d'usure est fixée en partie inférieure de l'âme, elle s'opposera très peu à la déformation de cette dernière.

L'usure du soc pourra être compensée par avancée de l'élément longiligne.

D'autres avantages et caractéristiques de l'invention apparaîtront à la lecture de la description d'une forme préférée de réalisation donnée à titre d'exemple non limitatif en se reférant aux dessins annexées en lesquels :

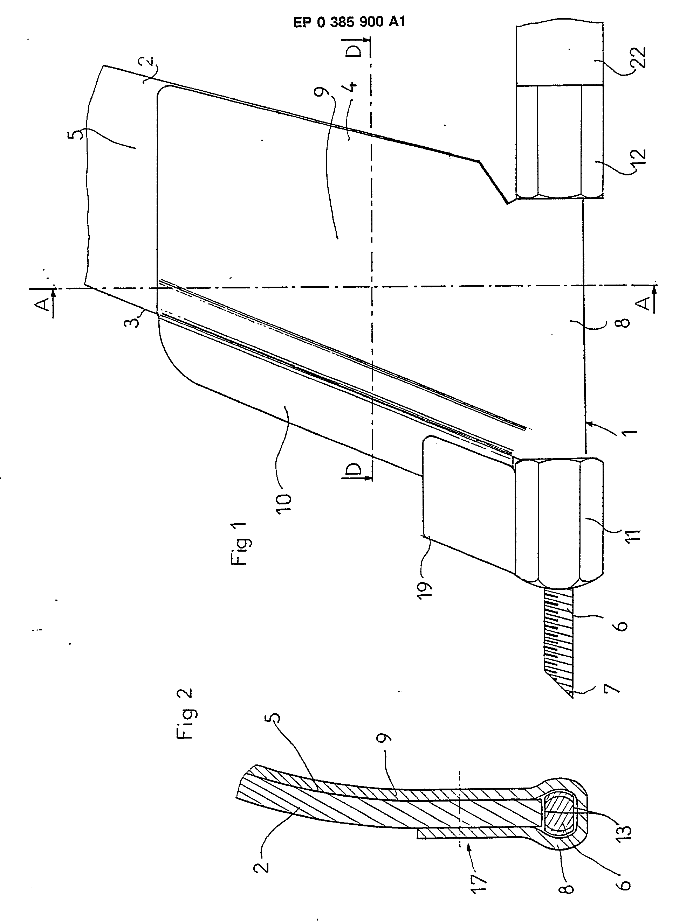

- la figure 1 est une vue extérieure d'une dent perfectionnée selon l'invention,
- la figure 2 est une vue en coupe transversale de la dent selon la ligne AA de la figure 1,

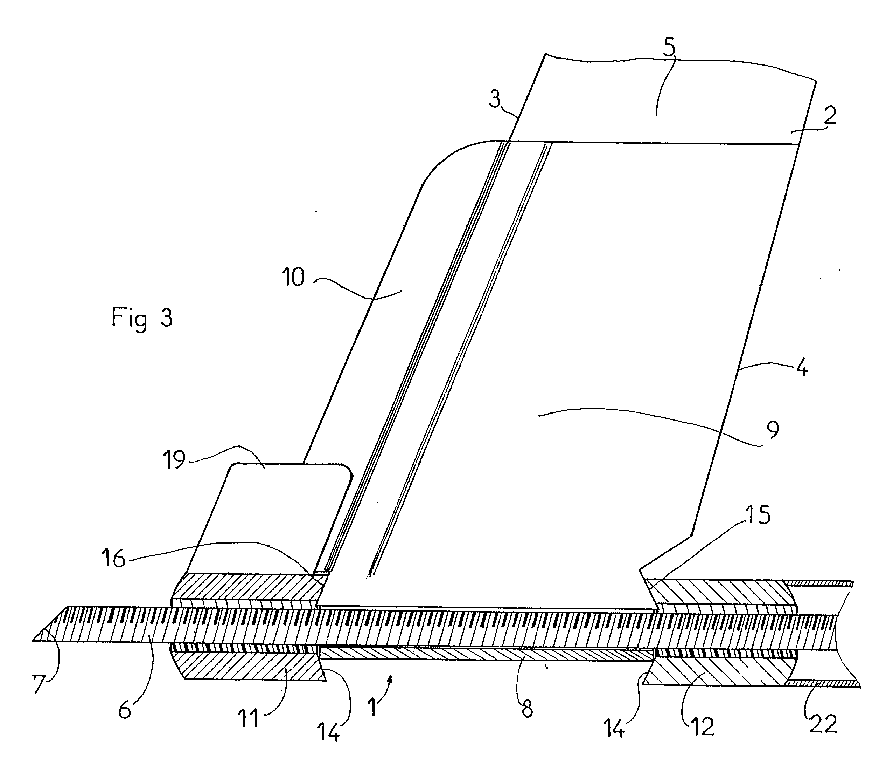

- la figure 3 est une vue en coupe longitudinale d'une dent selon la première forme de réalisation,

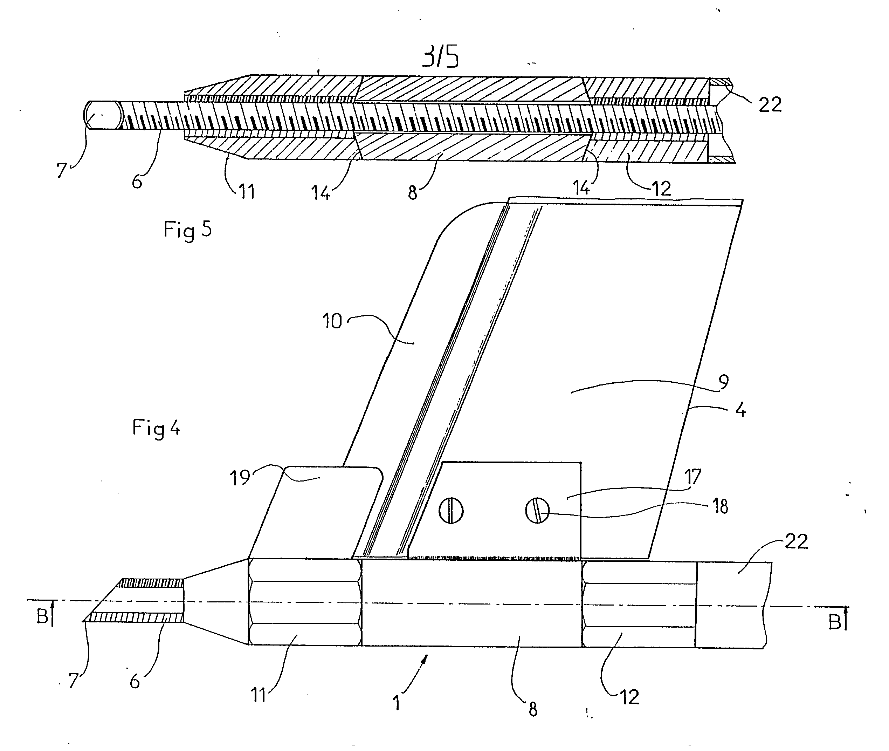

- la figure 4 est une vue extérieure d'une autre forme de réalisation de la dent selon l'invention,

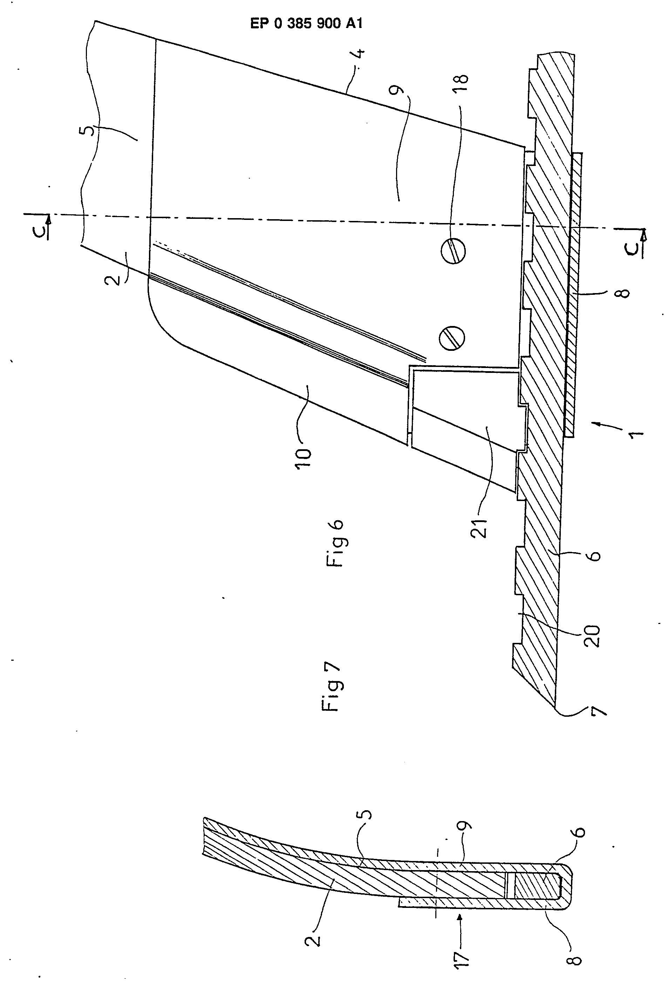

- la figure 5 est une vue en coupe de la dent selon la ligne BB de la figure 4,
- la figure 6 est une vue en coupe de la dent selon une troisième forme de réalisation.
- la figure 7 est une vue en coupe transversale de la dent selon la ligne CC de la figure 6,

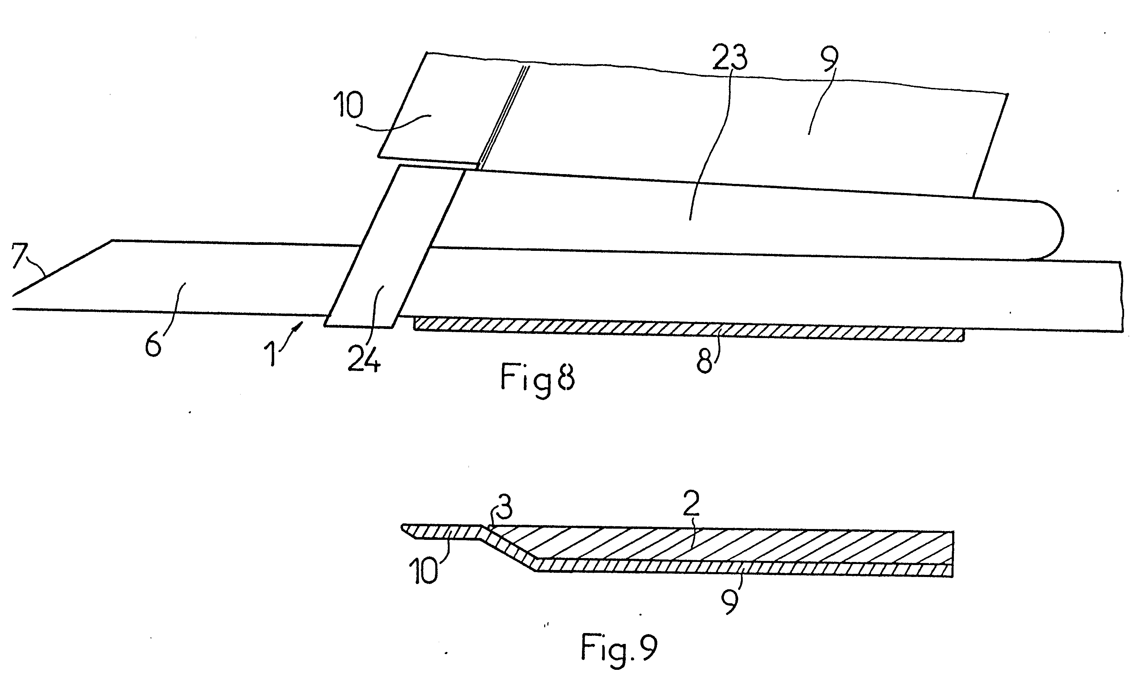

- la figure 8 est une vue en coupe de la dent selon une quatrième forme de réalisation,
- la figure 9 est une vue en coupe de la dent selon la ligne DD de la figure 1.

Telle que représentée, la dent perfectionnée selon l'invention pour le travail de la terre comporte un soc 1 monté en extrémité inférieure d'une âme allongée (2), élastique, courbée latéralement par rapport à la direction d'avancement dans le sol et présentant un bord avant 3 et un bord arrière 4 délimitant tous deux une face concave 5 se développant de manière oblique par rapport à la direction d'avancement, cette face concave étant de plus tournée vers l'avant.

Conformément à l'invention, le soc 1 est constitué par un élément longiligne 6 doté en avant d'une pointe 7 monté avec possibilité de déplacement axial et de blocage en position dans un fourreau 8 disposé sous l'extrémité inférieure de l'âme 2 auquel est fixé latéralement à l'âme une plaque d'usure 9 qui épouse sensiblement la forme de la face concave 5 de l'âme 2 et vient recouvrir cette dernière. De préférence la plaque d'usure est prolongée vers l'avant de l'âme 2 de façon à former un coutre avant 10, lequel vient masquer le bord avant 3 de l'âme 2, la dite plaque d'usure 9 étant fixée à la partie inférieure de l'âme.

Le soc 1 se développe de manière oblique par rapport au bord avant de l'âme de la dent, l'angle formé par l'axe longitudinal du soc et le dit bord avant étant un angle obtu.

L'élément longiligne 6 du soc 1 par sa pointe 7 vient se disposer en avant du coutre 10 à un niveau inférieur par rapport à ce dernier.

De préférence, la pointe 7 est formée par biseautage de l'extrémité avant de l'élément longiligne, le biseau formé étant tourné vers l'avant et vers le haut.

Préférentiellement, l'élément longiligne 1 du soc présente une longueur suffisante pour s'étendre en avant et en arrière du fourreau.

Selon une forme préférée de réalisation, cet élément longiligne est de forme cylindrique fileté suivant toute sa longueur et est bloqué en translation par rapport au fourreau par deux écrous 11 et 12 qu'il reçoit disposés respectivement en avant et arrière du fourreau 8 venant en pression contre le fourreau selon une première variante ou en pression contre l'âme 2 selon une seconde variante, de façon à immobiliser l'élément longiligne par rapport à la dent.

On conçoit que par dévissage des écrous 11 et 12 et déplacement axial de l'élément longiligne 6 dans le fourreau 8, il est possible de modifier l'avancement de la pointe 7 du soc 1. Ainsi, grâce à cette caractéristique, il sera possible de compenser l'usure de l'élément longiligne.

Selon une autre forme de réalisation, l'élément longiligne 6 présente deux méplats 13 longitudinaux diamétralement opposés qui ont pour but de faciliter le déblocage des écrous 11 et 12.

Avantageusement, l'écrou avant 11 présente une forme profilée. A cet effet, sa face avant sera convexe de façon à mieux pénétrer dans la terre.

Selon la forme préférée de réalisation, le diamètre de l'écrou avant est plus important que le diamètre du fourreau 8 et le dit écrou vient masquer l'extrémité avant du fourreau. Cette disposition permet de protéger l'extrémité avant du fourreau.

Préférentiellement, la face 14 de chaque écrou par laquelle il vient en contact, soit avec le fourreau, soit avec l'âme de la dent est concave, de préférence tronconique, et cette face coopère en appui avec une forme correspondante ménagée selon le cas, soit en extrémité du fourreau 8, soit sur l'âme 2.

Selon la première variante de réalisation selon laquelle les écrous viennent en appui contre le fourreau, les extrémités de ce dernier sont tronconiques.

Selon la seconde variante suivant laquelle les deux écrous viennent porter contre l'âme, cette dernière en extrémité inférieure présente deux pentes adaptées 15 et 16 ménagées respectivement dans le prolongement du bord arrière et du bord avant.

La pente arrière 15 forme un angle rentrant avec le bord arrière 4 tandis que la pente avant 16 forme un angle plat avec le bord avant 3.

Par blocage des écrous sur les pentes 15 et 16, l'ensemble formé par le fourreau et la plaque d'usure est immobilisé sur l'âme de la dent.

Ces dispositions ont pour but d'améliorer le blocage et le centrage des écrous 11 et 12 de fixation de l'élément longiligne.

Le fourreau 8 selon une première forme de réalisation est constitué par un élément tubulaire de section droite circulaire.

Selon une première variante, le fourreau peut être taraudé intérieurement en sorte de coopérer en vissage avec l'élément longiligne.

Selon une seconde variante, le fourreau intérieurement est lisse.

Selon cette première forme de réalisation au fourreau est fixé une chape 17 par laquelle il se fixe en extrémité inférieure de l'âme par l'intermédiaire de deux boulons 18 dont la tige de la vis de chacun est engagée dans des perçages alignés axialement pratiqués dans chacune des ailes de la chape et dans la partie inférieure de l'âme de la dent. Il pourra être utilisé également des goupilles fendues, élastiques.

Avantageusement, la plaque d'usure 9 est fixée par ces boulons.

A cet effet, la plaque d'usure par sa partie inférieure sera disposée entre une des ailes de la chape 17 et la face concave 5.

Avec un fourreau lisse intérieurement, il est nécessaire de prévoir des aménagements s'opposant à la rotation de l'élément 6 autour de son axe, lesquels aménagements coopèrent en blocage en rotation avec les deux méplats 13 que présente l'élément longiligne.

A titre d'exemple, ces aménagements pourront consister en une ovalisation du fourreau.

Selon une autre forme de réalisation, le fourreau 8 est formé par pliage suivant un U de la partie inférieure de la plaque d'usure, cette dernière par les ailes de ce U pouvant venir se fixer par boulons ou par goupilles en extrémité inférieure de l'âme 2 de la dent.

Selon cette forme de réalisation, le logement interne du fourreau ainsi formé, lequel logement est délimité par le U et le bord inférieur de l'âme de la dent, présente une section droite de forme rectangulaire, l'espace entre les deux côtés opposés les plus rapprochés l'un de l'autre correspondant à l'écart entre les deux méplats 13, ce qui permet d'assurer le blocage en rotation.

On a précédemment décrit un soc comportant un fourreau lisse et deux écrous de blocage de l'élément longiligne en translation.

Selon une variante de réalisation, le soc n'est doté que de l'écrou avant.

Selon cette forme de réalisation,le blocage de l'élément longiligne est effectué par un jonc élastique déformable.

Ce jonc est disposé autour de l'élément longiligne et vient en pression contre la face interne du fourreau.

Comme dit précédemment, la plaque d'usure 9 forme coutre 10 en avant du bord avant 3 de l'âme. Cette plaque d'usure présente une épaisseur constante.

Préférentiellement, ce coutre est obtenu par déformation de la plaque d'usure, déformation réalisée en sorte que le coutre soit décalé latéralement par rapport à la dite plaque et vient se disposer en avant de l'âme de la dent dans le prolongement de cette dernière.

Préférentiellement, la déformation de la plaque d'usure, en considérant une section transversale,est opérée en sorte que la zone déformée suive le profil que présente la face concave de l'âme au niveau de son bord avant.

Ainsi, avec une face concave présentant un biseau au niveau de son bord avant, la partie déformée de la plaque d'usure formera une pente entre le coutre et la plaque d'usure, pente qui est oblique par rapport à la direction d'avancement.

En outre, la face de l'âme de la dent opposée à la face concave, en considérant une section transversale, est prolongée vers l'avant de la dent par une des deux faces latérales du coutre. Ainsi, le bord avant de l'âme de la dent est protégée par le coutre et par la partie déformée de la plaque d'usure.

A titre d'exemple, le coutre est formé par pliage de la plaque d'usure.

Le coutre ainsi formé se développe de manière oblique par rapport à la direction d'avancement de la dent mais selon une seconde forme de réalisation, ce dernier pourra s'étendre de manière parallèle à cette direction.

Préférentiellement, le bord arrière de la plaque d'usure en considérant le sens d'avancement de la dent, se développe en arrière du bord arrière de l'âme, ce qui ménage à ce niveau un vide qui peut être comblé par un organe, tel un tube, de distribution d'engrais ou de produit phyto-sanitaire dans la terre.

Afin de pouvoir recevoir en fixation ce tube, la plaque d'usure pourra être équipée d'un orifice transversal.

Préférentiellement à l'écrou avant 11 est associé un aileron 19 s'étendant vers le haut, cet aileron venant en appui contre le coutre et plus précisément contre la face d'attaque de ce dernier, cette face d'attaque étant celle qui est dirigée vers l'avant.

Cet aileron 19 vient se disposer de manière oblique par rapport à la direction d'avancement de la dent dans la terre et est maintenu contre le coutre 10 par l'effet de la poussée que la terre exerce sur lui.

Cette disposition a pour but d'éviter le dévissage de l'écrou avant.

Selon une autre forme de réalisation, le bord arrière de l'aileron forme une fourche pour venir chevaucher le coutre de la dent.

On a précédemment décrit un élément longiligne fileté de section droite circulaire mais selon une autre forme de réalisation, cet élément peut être de section droite carré ou rectangulaire.

Selon cette forme de réalisation, le logement du fourreau présentera une section correspondante.

Selon une première variante, le blocage de l'élément longiligne en translation est opéré par une cale 21 qui pénètre dans un creux 20 d'une série de creux ménagés sur le dit élément.

Selon une autre forme de réalisation, le blocage de l'élément longiligne est effectué par une clavette 23 engagée axialement dans le fourreau depuis l'avant vers l'arrière pour venir bloquer le dit élément contre la paroi inférieure du fourreau.

Selon cette forme de réalisation, le logement délimité par le fourreau présente une hauteur décroissante depuis l'avant vers l'arrière.

Avantageusement, la clavette est plus longue que le fourreau de façon à venir par sa partie arrière en dehors du fourreau.

De plus, en partie avant, la clavette présentera deux pattes 24 verticales parallèles latérales venant enfourcher l'élément longiligne et masquer la partie inférieure avant de l'âme et du coutre.

Enfin, il est à noter que la partie de l'élément longiligne en débordement en arrière du fourreau pourra être avantageusement protégée par un tube 22 fixé à l'écrou arrière 12 prolongeant axialement le taraudage de ce dernier.

Les perfectionnements tels que décrits permettent d'accroitre de façon notable la durée de vie de la dent de travail de la terre.

Il va de soi que le présente invention peut recevoir tous aménagements et toutes variantes sans pour autant sortir du cadre du présent brevet.

## Revendications

1. Dent perfectionnée pour le travail de la terre comportant un soc (1) monté en extrémité inférieure d'une ame allongée (2) élastique, courbée latéralement par rapport à sa direction d'avancement dans le sol, et présentant un bord avant (3) et un bord arrière (4) délimitant tous deux une face concave (5) disposée obliquement par rapport à la direction d'avancement et tournée vers l'avant caractérisée en ce que le soc (1) est constitué par un élément longiligne (6), doté en avant d'une forme en pointe (7), monté avec possibilité de déplacement axial et blocage en translation dans un fourreau (8) disposé sous l'extrémité inférieure de l'âme (2) auquel est fixée latéralement à l'âme, une plaque d'usure (9) qui épouse sensiblement la forme de la face concave de l'âme (2) et vient recouvrir cette dernière.

2. Dent selon la revendication 1 caractérisée en ce que la plaque d'usure est prolongée vers l'avant de l'âme de façon à former un coutre avant (10), lequel vient masquer le bord avant (3) de l'âme, la dite plaque d'usure étant fixée à la partie inférieure de l'âme.

3. Dent perfectionnée selon la revendication 1 caractérisée en ce que l'élément longiligne (6) par sa pointe (7) vient se disposer en avant du coutre (10) à un niveau inférieur par rapport à ce dernier.

4. Dent perfectionnée selon la revendication 1 caractérisée en ce que l'élément longiligne (6) du soc (1) est fileté suivant toute sa longueur et est bloqué en translation par rap port au fourreau (8) par deux écrous (11) et (12) qu'il reçoit disposés respectivement en avant et arrière du fourreau (8) venant en pression soit contre le fourreau, soit contre l'âme (2) de la dent.

5. Dent perfectionnée selon les revendications 1 et 4 caractérisée en ce que l'élément longiligne présente deux méplats longitudinaux (13) diamètralement opposés.

6. Dent perfectionnée selon la revendication 4 caractérisée en ce que l'écrou avant (11) présente une forme profilée et que le diamètre de cet écrou est plus important que le diamètre du fourreau.

7. Dent perfectionnée selon la revendication 4 caractérisée en ce que la face (14) de chaque écrou (11), (12) par laquelle il vient en appui contre le fourreau (8) ou l'âme (2) est concave et coopère en appui avec une forme correspondante ménagée selon le cas, soit en extrémité du fourreau, soit sur l'âme (2).

8. Dent perfectionnée selon la revendication 7 caractérisée en ce que l'âme (2) en extrémité inférieure présente deux pentes (15) et (16) ménagées respectivement dans le prolongement du bord arrière et du bord avant destinées à coopérer en appui avec la face concave (14) de l'écrou correspondant.

9. Dent perfectionnée selon la revendion 8 caractérisée en ce que la pente arrière (15) forme un angle rentrant avec le bord arrière (4) de l'âme et que la pente avant (16) forme un angle plat avec le bord avant (3) de l'âme (1).

10. Dent perfectionnée selon la revendication 1 caractérisée en ce que le fourreau (8) est constitué par un élément tubulaire de section circulaire fileté intérieurement.

11. Dent perfectionnée selon la revendication 1 caractérisée en ce que le fourreau est constitué par un élément tubulaire de section droite circulaire lisse intérieurement.

12. Dent perfectionnée selon les revendications 1, 10 et 11 caractérisée en ce que le fourreau comporte une chape (17) de fixation en extrémité inférieure de l'âme de la dent et que la plaque d'usure par son extrémité inférieure est disposée par sa partie inférieure entre une des ailes de la chape (17) et la face concave (5), la dite plaque d'usure étant fixée à l'âme à ce niveau.

13. Dent perfectionnée selon la revendication 1 caractérisée en ce que le fourreau (8) est formé par pliage suivant un U de la partie inférieure de la plaque, cette dernière par les ailes du U venant se fixer par boulons aux extrémités inférieures de la dent.

14. Dent perfectionnée selon la revendication 1 caractérisée en ce que le coutre (10) est décalé latéralement par rapport à la plaque d'usure et que le dit coutre se développe de manière oblique par rapport à la direction d'avancement.

15. Dent perfectionnée selon la revendication 3 caractérisée en ce que l'écrou avant est équipé d'un aileron (19) s'étendant vers le haut, cet aileron venant en appui contre le coutre.

Fig 1

Fig 2

Fig 3

EP 0 385 900 A1

Fig 5

Fig 4

7  6  11  14  8  14  12

22

10

9  4

19  17  18

B  B

7  6  11  1  8  12  22

Fig 6

Fig 7

10

23 9

7

6 1 24 Fig 8 8

EP 0 385 900 A1

3 2

10 9

Fig.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-3750761 (SMITH) <br> * le document en entier * <br> --- | 1, 3, 5 | A01B13/08 |
| X | US-A-3550691 (CATERPILLAR TRACTOR CO.) <br> * le document en entier * <br> --- | 1, 3, 5, 11 | |
| A | FR-A-2036688 (BONNEL) <br> * le document en entier * <br> --- | 1, 3, 5 | |
| A | FR-A-600832 (MELOTTE) <br> --- | | |
| A | DE-A-3620483 (VEB KOMBINAT FORTSCHRITT LANDMASCHINEN NEUSTADT) <br> --- | | |
| A | US-A-2694354 (ROBERG) <br> ----- | | |

**DOMAINES TECHNIQUES RECHERCHES (Int. Cl.5 )**

A01B
E02F

Le présent rapport a été établi pour toutes les revendications

| Lieu de la recherche | Date d'achèvement de la recherche | Examinateur |
|---|---|---|
| LA HAYE | 09 AVRIL 1990 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)